# EUROPEAN PATENT SPECIFICATION

(11) **EP 1 826 686 B1**
(45) Date of publication and mention of the grant of the patent: **28.08.2013**
(21) Application number: 06004055.7
(22) Date of filing: 28.02.2006
(51) Int. Cl.: G10L 15/00, G10L 15/187, G06F 17/27

(54) **Voice-controlled multimedia retrieval system**
Sprachgesteuertes Multimedia-Datenabfragesystem
Système à commande vocale d'une base de données multimédia

(43) Date of publication of application: 29.08.2007
(73) Proprietor: Harman Becker Automotive Systems GmbH, 76307 Karlsbad (DE)
(72) Inventor: Hennecke, Marcus, Dr., 89075 Ulm (DE)
(74) Representative: Bertsch, Florian Oliver

(56) References cited:
- US-A1- 2004 054 541
- US-A1- 2005 108 017
- MAISON B ET AL: "Pronunciation modeling for names of foreign origin" AUTOMATIC SPEECH RECOGNITION AND UNDERSTANDING, 2003. ASRU '03. 2003 IEEE WORKSHOP ON ST. THOMAS, VI, USA NOV. 30-DEC. 3, 2003, PISCATAWAY, NJ, USA,IEEE, 30 November 2003 (2003-11-30), pages 429-434, XP010713325 ISBN: 0-7803-7980-2
- HENRICH P ED - TUBACH J P ET AL TUBACH J P ET AL: "LANGUAGE IDENTIFICATION FOR THE AUTOMATIC GRAPHEME-TO-PHONEME CONVERSION OF FOREIGN WORDS IN A GERMAN TEXT-TO-SPEECH SYSTEM" PROCEEDINGS OF THE EUROPEAN CONFERENCE ON SPEECH COMMUNICATION AND TECHNOLOGY (EUROSPEECH). PARIS, SEPT. 26 - 28, 1989, EDINBURGH, CEP CONSULTANTS, GB, vol. VOL. 2 CONF. 1, 1 September 1989 (1989-09-01), pages 220-223, XP000209996
- DAVID ELWORTHY: "Language Identification with Confidence Limits" PROCEEDINGS OF THE SIXTH WORKSHOP ON VERY LARGE CORPORA, [Online] 1998, pages 94-101, XP002381779 Montreal, Canada Retrieved from the Internet: URL:http://arxiv.org/abs/cs.CL/9907010> [retrieved on 2006-05-19]

## Description

This invention relates to a voice-controlled data system to a method for a voice-controlled selection of a media file stored on a data storage unit, and to a system and method for anatomically detecting the language of file identification data of a media file.

### Related Art

Recently the use of media files which are available over a centralized data base usable for a variety of users has become very well known. The use of audio or video files which are accessible via a communication network, e.g. the internet, using wired or wireless connections has become a widely spread phenomenon due to the fact that systems have been developed which allow the storing of audio and video data files in a compact way using different compression techniques. Furthermore, electronic music stores, e.g. iTunes from Apple, provide databases comprising a large variety of different music files which can be bought and downloaded onto a personal data storage unit.

In the art, many different formats for storing these media data have been known, e.g. media data stored in a MP3 format, AAC format, WMA format, MOV format, and WMV format. Additionally, many formats also allow the storing of meta-data corresponding to the media file. These meta-data or meta-information comprise data, e.g. the title of the file, allowing the identification of the data, the artist, the year of record, the genre, the tracks, etc.

Additionally, the voice-controlled operation of multimedia systems is well known in the art. Especially in vehicles, the voice-controlled operation of electronic systems comprising an audio module, a navigation module, a telecommunication module, and/or a radio module, is a useful feature for the driver which helps the driver to focus on the traffic. To this end, speech recognition units are used in which a voice command from the user of the electronic system is detected and phonetic transcriptions of the detected voice command are used for executing the command of the user. The control of an electronic system comprising media files in order to select one of the files is a difficult task, since the speech recognition system has to recognize the speech input from the user, which may comprise variable vocabulary such as the name or the title of the media file.

US 2004/0054541 A1 discloses an embedded device for playing media files, such as MP3 Players in which speech recognition grammar indices are generated for improving the speech recognition. Text from a file header of the media file is extracted, the extracted text being filtered and a list of keywords being generated based on the words deemed important from the header.

### Summary of the Invention

As a consequence there is need to provide a possibility for processing the media files in such a way that the language of the media data can be determined in an effective way.

These needs are met by the features of the independent claims. In the dependent claims preferred embodiments of the invention are described.

This need is met by a system and a method for automatically detecting the language of file identification data of a media file. According to one embodiment of the invention, said system comprises the data storage unit comprising the different media files, each media file having associated file identification data, the file identification data comprising at least one data entry, allowing the identification of a media file. Additionally, a language estimation unit is provided which estimates the natural language of said at least one data entry of the file identification data of the media file. Once the language has been estimated, a data processing unit adds the estimated natural language to the file identification data. The data entry and the estimated natural language identification tag build a data set of the file identification data. In the art language estimation units are known which are able to estimate the language of a written character string. These language estimation units can now be used in combination with the file identification data and can estimate the natural language of the data entry.

As has been discussed above, the file identification data, in the present case the data entry comprises at least one of the following information: artist of the media file, title, composer, recording year, genre etc. These language estimation systems have a certain accuracy by identifying the correct language. Especially in connection with the name of the artist, it is sometimes difficult to identify the language of the names of the artist. This may be also true for the title of the media file. By way of example, the name "George Michael" is a name which could originate from different languages. In this example, the name could be an English name, a French name, or a German name. Accordingly, the language estimation unit can only estimate the correct natural language with a certain likelihood. In order to increase the accuracy, or in order to increase the likelihood that the language estimation unit estimated the correct natural language, the language estimation unit uses a statistical model and takes also into account identification data of other media files and/or takes into account data entries of said media file for which the language of a data entry has to be determined. The use of information stored in other media files or the use of information stored in the file identification data of the media file itself help to increase the likelihood that the correct natural language for a data entry such as the name of the artist or the title of the media file are correct. This is due to the fact, in case of statistical models, the more impact data are used with which the language can be determined, the higher the likelihood that the estimated language is correct.

According to another embodiment of the invention, the latter relates to a method for automatically detecting the language of file identification data of a media file, the file identification data comprising at least one data entry allowing identification of a media file, the method comprising the step of selecting at least one of the media files out of the group of media files. From the file identification data of said media file at least one data entry is retrieved and the natural language of said at least one data entry of the media file is estimated based on a statistical model. The estimated natural language is then added to the file identification data. Preferably, the natural language is determined for different data sets of said media file, each data set comprising one data entry. In order to increase the likelihood for estimating the correct language of the file identification data, other media files or data entries of the selected file identification data of said media file are taken into account.

According to a preferred embodiment of the invention, a score is calculated for each estimated language, the score indicating to what extent the file identification data match an estimated natural language. In a statistical model the data entry such as the title or the name of the artist is compared to different languages, and a value is determined how good the processed data entry is in agreement with the structures and rules of a certain language. The score indicates whether an estimated data entry fits into the pattern or grammatical rules of a certain language. By way of example, for the name of Michael a high score could be obtained when the string Michael is compared to German, English or French language models. A high score means that the data entry fits well into a scheme of a sequence of characters which is characteristic for a predetermined language.

According to another embodiment of the invention, a confidence-based approach can also be used in which a confidence value is determined for each estimated language, the confidence value being a measure how sure it is that the estimated language of said data entry is the correct language. A high confidence value indicates that the system estimating the language has identified the correct natural language of the data entry. In the following, the difference between the score and the confidence value is explained. In the above-mentioned example of "George Michael" the language estimation unit would generate a high score for the languages German, English, and French. Due to the fact, however, that three different languages are likely to be correct, the confidence value in this example is low, as the system cannot be sure that the correct natural language of the data entry was determined.

If in another example a high score is obtained only for one natural language, when the data entry is compared to possible different languages, the confidence value may also be high, as this time there is a high likelihood that the correct natural language was determined. Accordingly, the confidence-based approach can use the calculated score for estimating the language of a data entry.

Often the estimation of the language of the name of the artist of the media file is the most difficult case. In order to correctly identify the language of the name of the artist, the language of the title of the media file may be determined, and the determined language of the title may also be used for the language of the artist. In the above-mentioned example this means that when the title of a song of George Michael is recognized as being an English title, the name of the artist can also be interpreted as being an English name.

Additionally, it is possible to use the other media files of an artist for increasing the likelihood of the correct language. To this end, other media files of an artist may be identified and the languages of the titles of the other media files can be estimated. The language of the name of the artist is then determined based on the estimated languages of the other media files. The above-mentioned examples show that the other media files may help for determining the language of a name of an artist.

The other titles of an artist can also be used for determining the language of a title of one of the media files of said artist. In order to do so the artist of a first media file may be determined in a first step. In a second step the other media files of said artists may be determined, and the languages of the other media files of said artist may be estimated, so that the language of the first media file can be determined based on the estimated languages of the other media files. Normally, an artist uses one language in which a song is written. In some cases an artist may use two different languages. Accordingly, if the languages of all the media files of the artist are determined, said language or one of the perhaps to languages of the artist is also valid for the first media file. By way of example, the most estimated language of the other media files may be used as language of the first media file. Furthermore, it is possible that the use of the language of the other media files depends on the determined score or the determined confidence value. If the confidence value is high or is larger than a predetermined value for a first language, this language may also be used for the first media file.

Furthermore, it is possible to combine all titles of the media files of said artist to a new combined title string and to estimate the language for said combined title string. The estimated language is then used for the language of the data entry of the first media file. This method is based on the fact that the larger the data string the better the accuracy of the language estimation.

Furthermore, it is possible that for estimating the language of the first media file the score of each estimated language for the other media files is determined, wherein the scores of each determined language are combined, the language having the highest score being used as language for the first media file. For determining the language of the file identification data only one data entry such as the title or the name of the artist may be used. However, it is also possible to determine the language of several data entries and to determine the language based on the several estimated languages.

According to another embodiment of the invention, it is determined whether a predetermined title of a media file is present for different artists. In a further aspect of the invention the data files of the data storage unit can be ranked depending on the determined confidence value. As explained above, large data bases such as Gracenote exist having several millions of media files. When the language identification tags should be added to each data entry of the file identification data, this processing is a very time-consuming task. According to this aspect of the invention, the adding of the language ID is then carried out automatically. Due to the fact that the automatic estimation of the language cannot be done with a 100% accuracy, a user has to look over the processed data and has to verify the estimated languages by hand. When the data files are now arranged depending on the determined confidence value, the data files can be arranged in such a way that the data files having a low confidence value are first presented to the user. The user can then check these data files and can check whether the determined language was correctly determined. Accordingly, these aspects of the invention help to speed up the processing of the data. When a media file was determined having one title and which is present for different artists of different languages, this media file may also be ranked with a low confidence, so that the user can verify the estimated language.

### Brief Description of the Drawings

In the following, specific embodiments of the invention will be described by way of example with respect to the accompanying drawings, in which
- Fig. 1: is a schematic view of a voice-controlled data system,
- Fig. 2: shows in detail part of the system of Fig. 1,
- Fig. 3: is a flowchart showing the different steps for a voice-controlled selection of a media file (according to an embodiment of the invention),
- Fig. 4: is a flowchart showing another embodiment for selecting a media file,
- Fig. 5: is an example of a phonetic transcription,
- Fig. 6: shows a schematic view of a system for automatically determining the language of a file identification data of a media file,
- Fig. 7: is a flow chart showing the different steps for detecting the language, and
- Fig. 8: is another flow chart showing the steps for detecting the language of a media file.

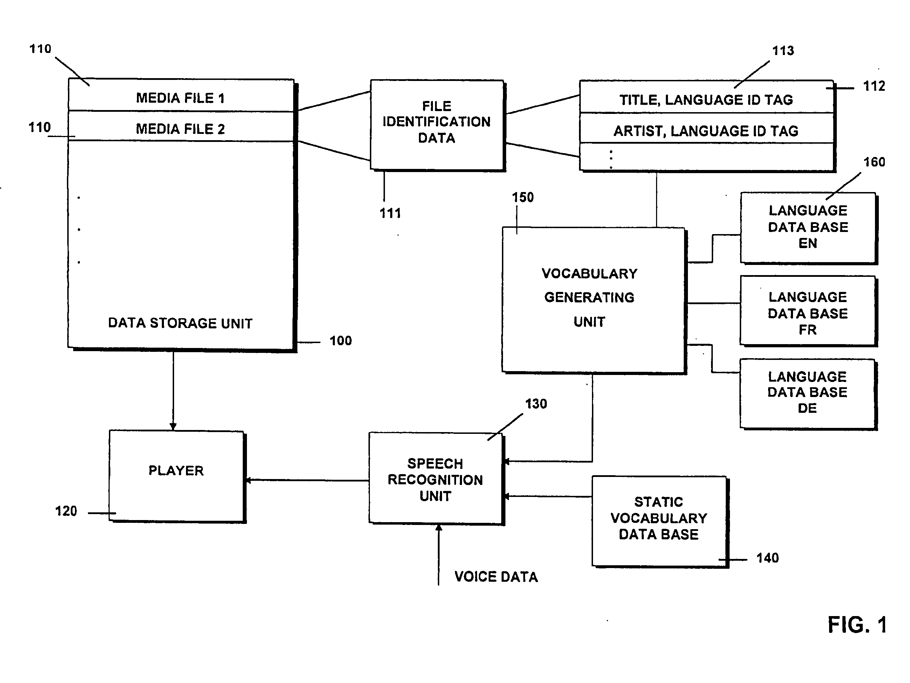

In Fig. 1 a voice-controlled data system is shown. The system comprises a data storage unit 100. The data storage unit 100 comprises different media files 110. The media file could comprise audio or video data and could be part of a compact disc or DVD or any other storage unit, e.g. a SD card, or any other storage medium for storing data. The storage unit could also comprise media files which were downloaded from an electronic music store, so that the media files 110 contained in the data storage unit would depend on the individual preferences of the user. In this case, the media files could be from different artists, e.g. the data storage unit may have media files, e.g. songs from many different artists, and could also comprise titles of different genres, be it jazz, pop, classic, etc. The data storage unit could be incorporated into a vehicle (not shown), but could also be used in a non-mobile environment.

For the identification of the different media files, each media file has a corresponding file identification data 111. The structure of the file identification data may depend on the media files, i.e. on the way the media files are stored on a data storage unit. Different ways of storing media file data have been known. The file identification data 111 can be part of a header of the media files. The file identification data can be part of the media file, but they could also be stored in a separate file and they could be linked to the media files 110. If the media files are stored in the MP3 format, the file identification data are stored in the ID3 format. By way of example, the language identification data could be stored in the ID3v2 system, the ID3v2 system allowing to store file related data of MP3 data. In general, the composition of the file identification data will depend on the storing format of the data itself, be it MP3, AAC, WMA, MOV or WMV or any other format.

The file identification data of each media file comprise different data sets 112, each data set comprising a data entry and the corresponding language ID tag. These data sets help to recognize the media file and comprise information about the title of the file, the artist of the file, the genre of the file, the composer, the number of tracks, etc. Each data set 112 comprises a language identification tag 113 which indicates the language of the information comprised in the data set. In the example shown in Fig. 1 the title comprising natural language could be an English title (e.g. "Singing in the Rain"). In this case the language identification tag would show the information that the title is an English language title. Furthermore, the data set indicating the artist of a song of a media file could be a proper name. This name also comprises a language identification tag 113 which helps to correctly pronounce the name of the artist.

If a user of the data storage system wants to select one of the media files comprised in the data storage unit 100 he or she may use commands such as "play [name of the title]" or "play [name of artist]". The correct media file has to be transferred to a media player 120 which will play the selected media file in accordance with the input voice data input into a speech recognition unit 130. The speech recognition unit 130 ' has to correctly identify the voice command input by the user of the system. This voice command normally comprises an often used static vocabulary, e.g. commands like play, stop, go to, forward, backwards, etc. In order to correctly identify this vocabulary, the speech recognition unit may have access to a static vocabulary database 140 which helps to identify the static vocabulary and provides the corresponding phonetic transcriptions.

In contrast to the static vocabulary, the voice command also comprises variable vocabulary which depends on the content of the media file, e.g. the title of the media file, the artist of the file etc. The speech recognition unit 130 has to recognize the static vocabulary and the variable vocabulary in order to generate the correct speech control command input into the player. To this end, a vocabulary generating unit 150 generates a phonetic transcription of the file identification data 111 of the media files 110. For the correct phonetic transcription of the different data sets comprised in the file identification data, the language identification tags 113 are used. E.g., the title of the song may be "La Promesse". In this case the language identification tag indicates that the title is French. The vocabulary generating unit 150 then knows how to generate the phonetic transcription of the title. The singer of this title, Kate Ryan, has an English pronounced name, so that the language identification tag in this case will identify the artist as having an English pronounced name. For generating the phonetic transcription of the different file identification data, the vocabulary generating unit may access different databases 160, these databases comprising phonetic transcriptions of terms of a certain language and/or phonetic rules of said language. In the embodiment shown, three different language databases 160 are shown, an English language database, a French language database, and a German language database. For the phonetic transcription, the vocabulary generating unit may use a computer readable phonetic alphabet such as SAMPA or IPA, which are known in the , art.

As can be seen in Fig. 1, the language identification tag 113 helps to identify the language of the different datasets 112 of the file identification data, so that the vocabulary generating unit 150 generates the correct phonetic transcription of the information comprised in the file identification data. The phonetic transcription generated by unit 150 is fed to the speech recognition unit which uses known speech recognition techniques in order to correctly identify the voice data or voice command input by the user of the system. The language identification tag helps to create the correct vocabulary which strongly depends on the media file comprised in the data storage unit 100.

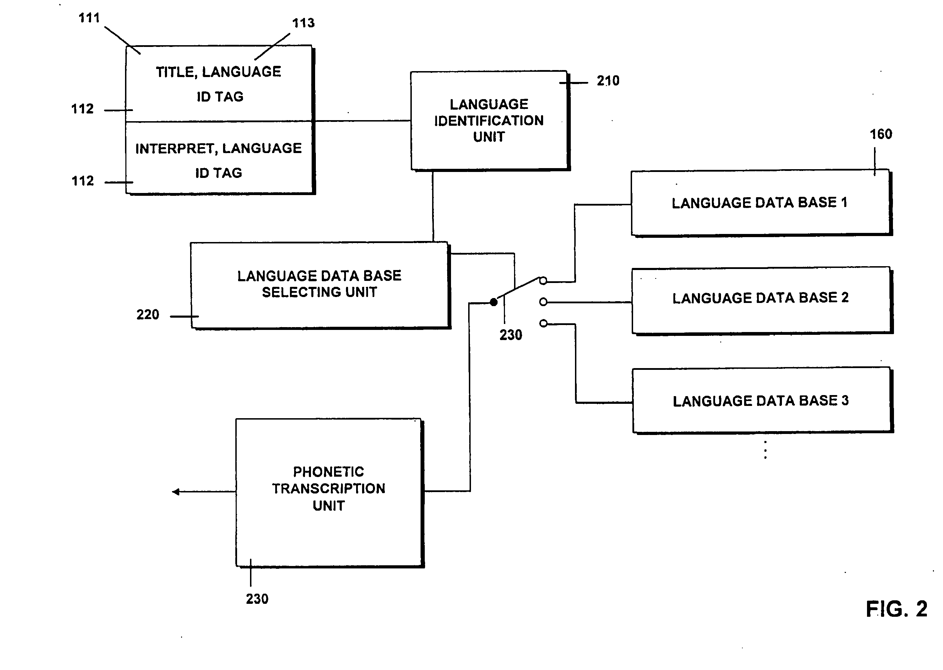

In Fig. 2 the functioning of the vocabulary generating unit 150 is shown in further detail. A language identification unit 210 extracts the language identification tag out of the set 112 and transmits the language identification tag to the language database selecting unit 220. The language database selection unit 220 selects one of the databases 160 in accordance with the language identification tag 113 extracted from the file identification data 111. The language database selection unit 220 controls a switching unit 230 and selects the database comprising phonetic rules and/or a phonetic transcription of different terms of the language identified by the language identification unit 210.

A phonetic transcription unit 230 produces the phonetic data of the information comprised in the file identification data, i.e. of the title of the artist, etc.

The phonetic transcription unit 230 transfers the generated phonetic data to the speech recognition unit 130 of Fig. 1, which then uses known recognition techniques, such as dynamic time warping, dynamic programming, statistical modeling technique, such a hidden Markov models. The functioning of speech recognition units is well known in the art and, for the sake of clarity, a detailed description thereof is omitted, as it does not help for the understanding of the present invention.

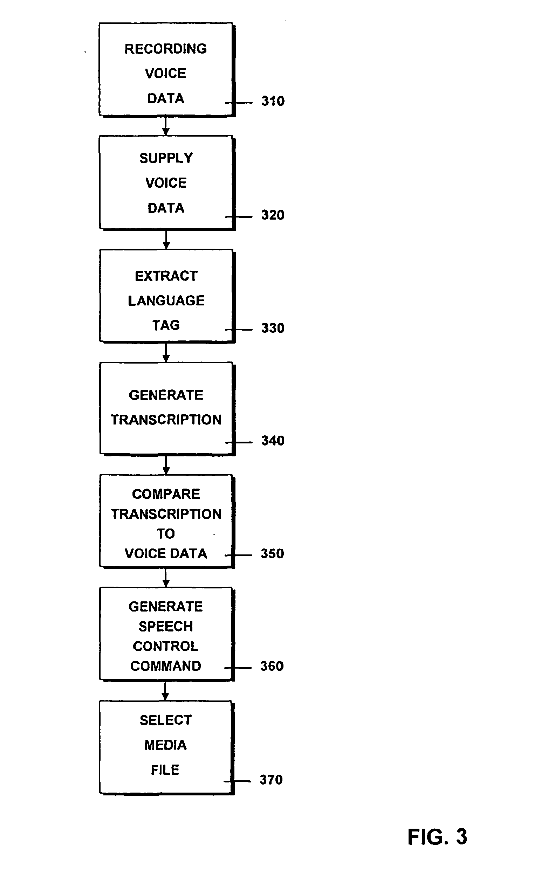

In Fig. 3 the different steps for the voice-controlled selection of a media file are shown. In a first step 310 the voice data of the user of the system comprising the voice command are recorded. In a next step 320 the voice data are supplied to the speech recognition unit 130. Additionally, the language identification tag 113 is extracted from the file identification data, in step 330. Now the language of the terms comprised in the file identification data is known, so that the phonetic transcriptions can be generated in step 340. In step 350 the phonetic transcription generated in step 340 is compared to the voice data in step 350. The speech recognition unit then generates a speech control command for the media player 120 by using speech recognition techniques known in the art (step 360). In step 370 the media file is selected in correspondence with the generated speech control command. The language identification data, i.e. the language identification tag helps to produce the correct phonetic transcription of the natural language term(s) comprised in the file identification data 111, so that the correct phonetic transcriptions can be obtained. As a consequence, the voice-controlled handling of a selection of a media file can be improved. Apparently, the step 330 and 340 for generating the correct phonetic transcriptions may also be performed before the voice data is input in steps 310 and 320. The recognition vocabulary may be prepared in advance and stored until the system is used by inputting a voice command.

The invention is not limited to the selection of one media file. It should be understood that at least one media file can be selected. In the case the user inputs the command "play [name of the artist]", the system can also select all files of said artist.

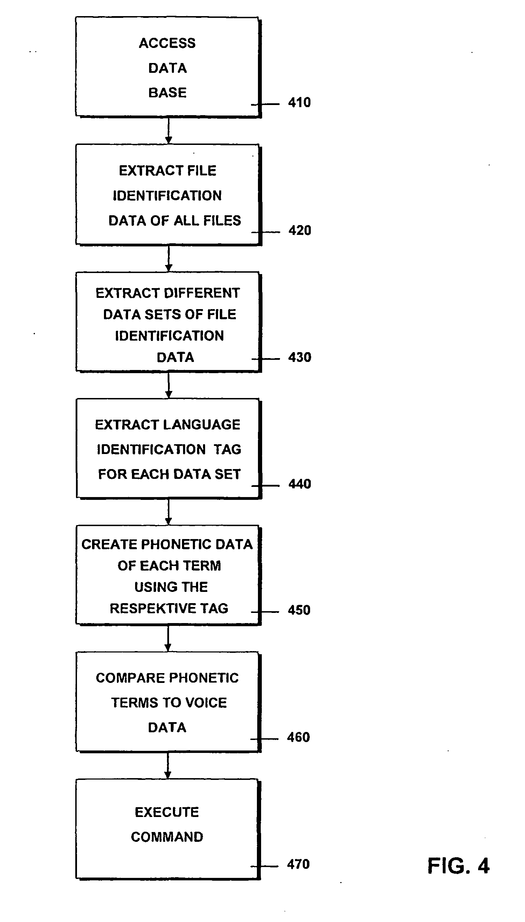

In Fig. 4 another embodiment is shown. In a first step a database is accessed, the database comprising a data storage unit as shown in Fig. 1. In a next step 420 the file identification data of all files comprised in the database are extracted. The file identification information comprised in the file identification data has to be known, so that the different sets of each file identification data are extracted (step 430). For the correct phonetic transcription of the different terms of the data sets 112, the language identification tags are extracted for each data set (step 440). In a next step the phonetic data of each term of the data set is created by using the respective language identification tags (step 450). As it was already mentioned above, the language of each data set is not necessarily the same (cf. above the song "La Promesse" of Kate Ryan). The user will probably know the pronunciation of the file identification data, the pronunciation depending on the language. To this end, the language of the information comprised in the file identification data has to be known. After phonetic transcriptions have been made, they are compared to the voice data input into the system (step 460), and the input voice control command can be executed (step 470).

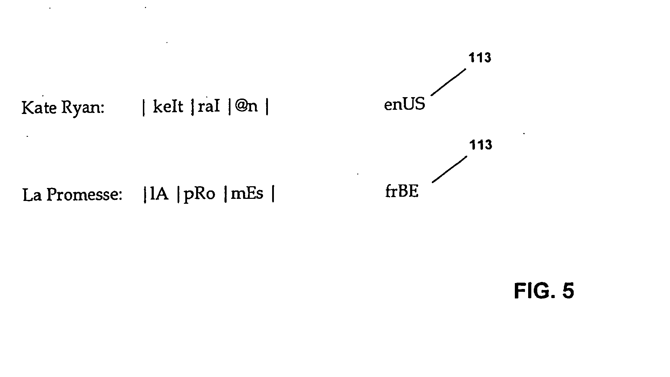

Fig. 5 shows a phonetic transcription of the name Kate Ryan and of the title of her song "La Promesse" in SAMPA.

Additionally the language identification tags 113 are shown. In the example shown "enUS" indicates that the singer has an English name (en), and "frBE" indicates that the Title is French (fr). Using the tags 113 the correct phonetic transcription can be obtained.

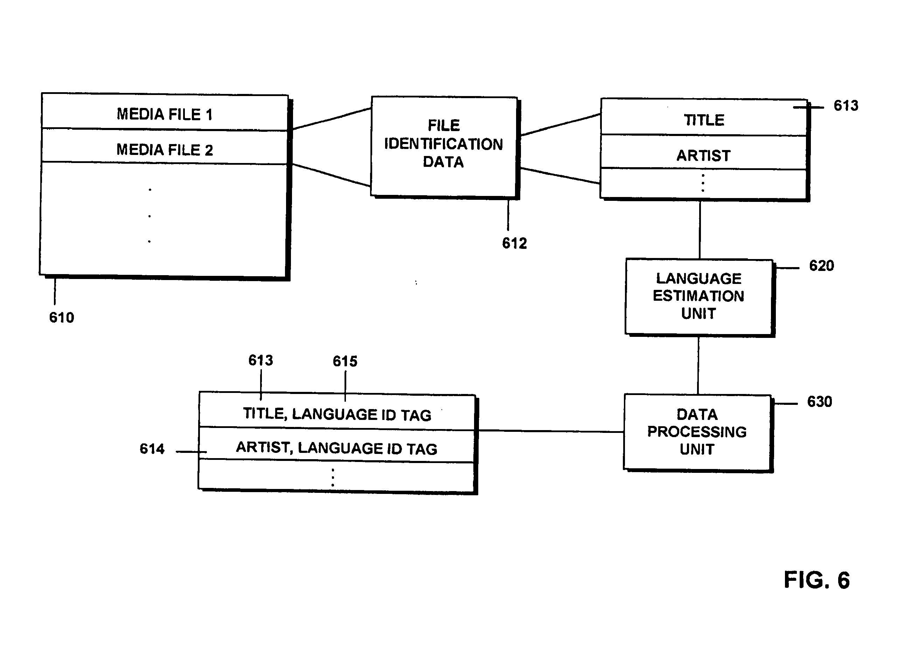

The language identification tag 113 of Fig. 5 has to be somehow incorporated into the identification data. In Fig. 6 a system is shown which helps to automatically determine the language of the file identification data. In Fig. 6 the system comprises a data storage unit 610 which comprises different media files 611. In many data storage formats such as the digital data stream of a compact disc the media files do not comprise file identification data. If a user ripped the media files 611 comprised on a compact disc for storing the media files in another format such as an MP3 format or any other compressed data format, it would be difficult to select a media file using voice commands, as no information is comprised in the media file allowing the identification such as the artist or the title of the file. In order to generate file identification data 612 data bases may be accessed which comprise the additional file identification data. One example of a commercially available data base is the Gracenote data base. As already described in connection with Fig. 1 and 2, the file identification data comprise information such as the title or the artist in different data entries 613. However, in these data entries the language ID is normally not incorporated.

In other examples of the data storage unit 610 the file identification data 612 may already be present in the media file and need not to be transmitted from other data bases. When the media file is present having the file identification data such as title and artist, the natural language of the title and the artist is not yet known. A user could determine the language for each data set of the data storage unit, but this would be a very time-consuming task. For automating this adding of the language ID a language estimation unit 20 is provided which estimates the language based on the information contained in the file identification data. These language estimation units extract the data entries, e.g. the title, such as "Singing in the rain" or the name of the artist such as George Michael and determine the respective natural language of the data entries 613. The determined natural language is then fed to a data processing unit which adds the language ID tag estimated by unit 620 to the respective data entry. When the data processing unit has added the language to file identification data comprising different data sets 614, each data set comprising a data entry 613 such as the title or the artist and the corresponding language ID tag 615.

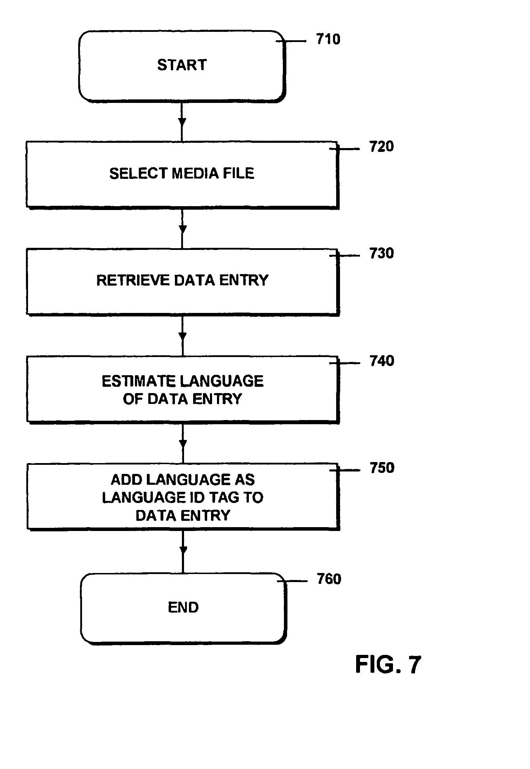

In Fig. 7 the basic steps carried out for determining the natural language ID are shown. The process starts in a step 710. In a first step 720 the media file is selected for which the language of the file identification data should be estimated. In step 730 the data entry 613, such as the title or the artist are retrieved for the file identification data. In step 740 the natural language of the data entry is determined using a statistical model as will be explained lateron, and the determined language is then added to the data entry in step 750. The process ends in step 760.

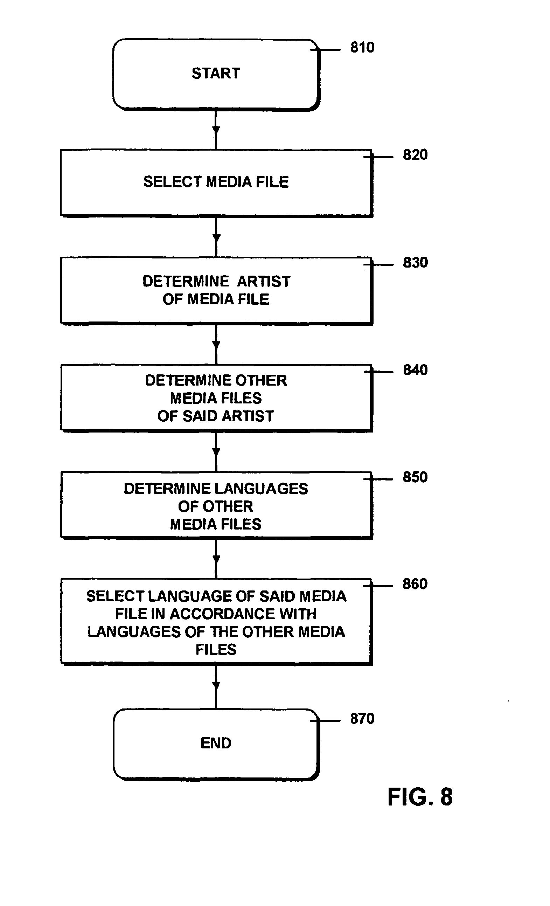

In Fig. 8 a more detailed flow chart for selecting the language of a data entry is shown. In case of names or short titles the estimated language will often be incorrect. In order to improve the likelihood that the language estimation unit 620 determines the correct language additional information of the artist or of the media file may be used. In the embodiment shown in Fig. 8 media files of the same artist are taken into consideration for determining the correct language. The method starts in step 810. In step 820 the media file is selected for which the language of the file identification data should be determined. In order to do so first of all the artist itself is determined in step 830 retrieving the information from the corresponding data entry. In a next step 840 other media files of said artist are determined. In step 850 the language of the other media files may be determined and the language-determining step 850 may be used for the media file selected in step 820 (step 860). In connection with step 850 it is possible to estimate the languages of the title or the language of an album or an artist. This can be done for all the other media files of said artist or for at least some of the other media files of said artist comprised in a data base. If the result of step 850 is that a majority of the media files have file identification data of a first predetermined language, said predetermined language may be used for determining the language of the media file selected in step 820. Artists often use one single language in their songs. In rare cases two different languages are used. Accordingly, if the language is estimated for all the titles or all the albums, there is a high likelihood that the language that was estimated in most of the cases is the language for all of the media files. According to one embodiment of the invention, the transfer of the estimated language to all or other media files can be made dependent on the likelihood that the estimated language is correct. To this end, the score can be determined for each estimated language, the score indicating the concordance of a data entry with one language. Each language has its characteristic sequence of characters. The score indicates whether a data entry such as the title or the name fits well the characteristics of a certain language. Additionally, a confidence value can be determined for each determined language. In most of the cases the language estimation unit uses a statistical model by comparing the data entry to different languages. The most likely language, e.g. the language having the highest score may be used as estimated language. The confidence value indicates how sure the language estimation unit 620 can be that the correct language was identified. For determining the language of the other media files in step 850 all the data entries of the media files may be connected to one large combined data entry, and the language can be determined for the combined data entry. Additionally, it is possible to separately estimate the language for each data entry and to select the language which was estimated in most of the cases. Additionally, the score resulting from each estimation may be used, and the different scores for the different media files can be combined in order to select the correct language.

In the embodiment of Fig. 8 the information of other media files are taken into account. However, it is also possible to consider other data entries of the media file for which the language should be selected. By way of example, if the language of the name of the artist is to be determined, the language of the title may be determined first, and the determined language may then also be used for the language of the name of the artist. It should be understood that the selection can also be made dependent on the determined score or confidence values.

Summarizing, the embodiments shown in Figs. 5-8 help to correctly identify the language of a file identification data of a media file, the describe embodiments highly increasing the likelihood that the correct languages are estimated and added to the file identification data.

In conclusion, the present invention helps to provide a speech control system which uses the information of the language identification data for the correct generation of the voice control command which is fed to the media player which selects the media file in correspondence with the input voice data.

## Claims

1. System for automatically detecting the language of file identification data oaf a media file, comprising:
- a data storage unit (610) comprising media files, each media file having associated file identification data (612), the file identification data comprising at least one data entry (613) allowing the identification of a media file, **characterized by**
- a language estimation unit (620) estimating the natural language of said at least one data entry of the media file identification data, wherein the language estimation unit determines the natural language of said at least one data entry based on a statistical model and taking into account identification data of other media files of the artist and/or data entries of said media file,
- a data processing unit (630) for adding the estimated natural language to the file identification data.

2. System for automatically detecting the language according to claim 1, **characterized in that** the file identification data comprises different data sets (614), each data set comprising one data entry and the added natural language.

3. System according to claim 1 or 2, **characterized in that** said data entry comprises at least one of the following information: artist of the media file, title of the media file, composer of the media file, recording year of the media file, genre of the media file.

4. Method for automatically detecting the language of file identification data of a media file, the file identification data comprising at least one data entry allowing the identification of a media file, the method comprising the following steps:
- selecting at least one media file out of a group of media files,
- retrieving said at least one data entry of the file identification data,
- estimating the natural language of said at least one data entry of the media file identification data based on a statistical model, wherein the natural language of said at least one data entry (613) is determined taking into account file identification data of other media files of the artist or data entries of said media file,
- adding the estimated natural language to the file identification data.

5. Method according to claim 4, wherein the file identification data (612) comprise different data sets (614), each data set comprising one data entry, wherein the natural language is estimated for several data entries of the file identification data.

6. Method according to any of claims 4 or 5, wherein a score is calculated for each estimated language, the score indicating to what extend the file identification data match an estimated natural language.

7. Method according to any of claims 4 to 6, wherein for estimating the natural language a confidence based approach is used, for which a confidence value is determined for each estimated language, the confidence value being a measure how sure it is that the estimated language of said data entry is the correct language.

8. Method according to any of claims 4 to 7, wherein the natural language of said data entry is estimated based in the determined score or determined confidence value.

9. Method according to any of claims 4 to 8, wherein the natural language is determined for at least one of the following information comprised in the file identification data: artist of the media file, title of the media file, composer of the media file, recording year of the media file, genre of the media file.

10. Method according to any of claims 4 to 9, wherein for estimating the language of the name of the artist of a media file, the language of the title of said media file is determined and the determined language is used as language of the artist.

11. Method according to any of claims 4 to 10, wherein for determining the language of the name of the artist, the following steps are carried out:
- identifying other media files of said artist,
- estimating the languages of the titles of the other identified media files,
- determining the language of the name of the artist based on the estimated languages of the other media files.

12. Method according to any of claims 4 to 11, wherein for determining the language of the title of a first media file, the following steps are carried out:
- identifying the artist of said first media file,
- identifying other media files of said artist,
- estimating the languages for the other media files of said artist,
- determining the language of said first media file in correspondence with the estimated languages of the other media files.

13. Method according to claim 12, wherein for estimating the languages of the other media files of said artist, all titles of the other media files are combined to a new title string and the natural language is estimated for said new title string and the estimated language is used as language of the first media file.

14. Method according to claim 12, wherein the language of the other media files that was estimated most often is used as language for the first media file.

15. Method according to claim 12, wherein for estimating the language of media files of a predetermined artist, the language of all media files of said artist is determined and the most likely language is used for all media files of said artist.

16. Method according to claim 12, wherein for estimating the language of said first media file, the score of each estimated language for the other media is determined, wherein the scores of each determined language are combined, the language having the highest score being used as language of the first media file.

17. Method according to any of claims 8 to 15, wherein the media files are arranged in accordance with the determined confidence value.

18. Method according to any of claims 4 to 17, further comprising the step of determining whether a media file having a predetermined title is present for different artists.

## Patentansprüche

1. System zum automatischen Erkennen der Sprache der Dateiidentifizierungsdaten einer Mediendatei, umfassend:
- eine Datenspeichereinheit (610), die Mediendateien umfasst, wobei jede Mediendatei verknüpfte Dateiidentifizierungsdaten (612) aufweist, wobei die Dateiidentifizierungsdaten mindestens einen Dateneintrag (613) umfassen, der die Identifizierung einer Mediendatei ermöglicht, **gekennzeichnet durch**
- eine Sprachschätzungseinheit (620), welche die natürliche Sprache des mindestens einen Dateneintrags der Mediendatei-Identifizierungsdaten schätzt, wobei die Sprachschätzungseinheit die natürliche Sprache des mindestens einen Dateneintrags basierend auf einem statistischen Modell bestimmt und Identifizierungsdaten anderer Mediendateien des Interpreten und/oder Dateneinträge der Mediendatei berücksichtigt,
- eine Datenverarbeitungseinheit (630) zum Hinzufügen der geschätzten natürlichen Sprache zu den Dateiidentifizierungsdaten.

2. System zum automatischen Erkennen der Sprache nach Anspruch 1, **dadurch gekennzeichnet, dass** die Dateiidentifizierungsdaten unterschiedliche Datensätze (614) umfassen, wobei jeder Datensatz einen Dateneintrag und die hinzugefügte natürliche Sprache umfasst.

3. System nach Anspruch 1 oder 2, **dadurch gekennzeichnet, dass** der Dateneintrag mindestens eine der folgenden Informationen umfasst: Interpret der Mediendatei, Titel der Mediendatei, Komponist der Mediendatei, Aufzeichnungsjahr der Mediendatei, Gattung der Mediendatei.

4. Verfahren zum automatischen Erkennen der Sprache der Dateiidentifizierungsdaten einer Mediendatei, wobei die Dateiidentifizierungsdaten mindestens einen Dateneintrag umfassen, der die Identifizierung einer Mediendatei ermöglicht, wobei das Verfahren folgende Schritte umfasst:
- Auswählen mindestens einer Mediendatei aus einer Gruppe von Mediendateien,
- Abrufen des mindestens einen Dateneintrags der Dateiidentifizierungsdaten,
- Schätzen der natürlichen Sprache des mindestens einen Dateneintrags der Mediendatei-Identifizierungsdaten basierend auf einem statistischen Modell, wobei die natürliche Sprache des mindestens einen Dateneintrags (613) bestimmt wird, indem Dateiidentifizierungsdaten anderer Mediendateien des Interpreten oder Dateneinträge der Mediendatei berücksichtigt werden,
- Hinzufügen der geschätzten natürlichen Sprache zu den Dateiidentifizierungsdaten.

5. Verfahren nach Anspruch 4, wobei die Dateiidentifizierungsdaten (612) verschiedene Datensätze (614) umfassen, wobei jeder Datensatz einen Dateneintrag umfasst, wobei die natürliche Sprache für mehrere Dateneinträge der Dateiidentifizierungsdaten geschätzt wird.

6. Verfahren nach einem der Ansprüche 4 oder 5, wobei für jede geschätzte Sprache eine Punktzahl berechnet wird, wobei die Punktzahl angibt, in welchem Maße die Dateiidentifizierungsdaten mit einer geschätzten natürlichen Sprache übereinstimmen .

7. Verfahren nach einem der Ansprüche 4 bis 6, wobei für die Schätzung der natürlichen Sprache eine Methode auf Konfidenzbasis verwendet wird, für die ein Konfidenzwert für jede geschätzte Sprache bestimmt wird, wobei der Konfidenzwert ein Maß dafür ist, wie sicher es ist, dass die geschätzte Sprache des Dateneintrags die richtige Sprache ist.

8. Verfahren nach einem der Ansprüche 4 bis 7, wobei die natürliche Sprache des Dateneintrags basierend auf der bestimmten Punktzahl oder dem bestimmten Konfidenzwert geschätzt wird.

9. Verfahren nach einem der Ansprüche 4 bis 8, wobei die natürliche Sprache für mindestens eine der folgenden Informationen bestimmt wird, die in den Dateiidentifizierungsdaten enthalten ist: Interpret der Mediendatei, Titel der Mediendatei, Komponist der Mediendatei, Aufzeichnungsjahr der Mediendatei, Gattung der Mediendatei.

10. Verfahren nach einem der Ansprüche 4 bis 9, wobei zum Schätzen der Sprache des Namens des Interpreten einer Mediendatei die Sprache des Titels der Mediendatei bestimmt wird und die bestimmte Sprache als Sprache des Interpreten verwendet wird.

11. Verfahren nach einem der Ansprüche 4 bis 10, wobei zum Bestimmen der Sprache des Namens des Interpreten die folgenden Schritte ausgeführt werden:
- Identifizieren anderer Mediendateien des Interpreten,
- Schätzen der Sprachen der Titel der anderen identifizieren Mediendateien,
- Bestimmen der Sprache des Namens des Interpreten basierend auf den geschätzten Sprachen der anderen Mediendateien.

12. Verfahren nach einem der Ansprüche 4 bis 11, wobei zum Bestimmen der Sprache des Titels einer ersten Mediendatei die folgenden Schritte ausgeführt werden:
- Identifizieren des Interpreten der ersten Mediendatei,
- Identifizieren anderer Mediendateien des Interpreten,
- Schätzen der Sprachen für die anderen Mediendateien des Interpreten,
- Bestimmen der Sprache der ersten Mediendatei in Übereinstimmung mit den geschätzten Sprachen der anderen Mediendateien.

13. Verfahren nach Anspruch 12, wobei zum Schätzen der Sprachen der anderen Mediendateien des Interpreten alle Titel der anderen Mediendateien in eine neue Titelzeichenkette kombiniert werden und die natürliche Sprache für die neue Titelzeichenkette geschätzt wird und die geschätzte Sprache als Sprache der ersten Mediendatei verwendet wird.

14. Verfahren nach Anspruch 12, wobei die Sprache der anderen Mediendateien, die am häufigsten geschätzt wurde, als Sprache für die erste Mediendatei verwendet wird.

15. Verfahren nach Anspruch 12, wobei zum Schätzen der Sprache der Mediendateien eines vorbestimmten Interpreten die Sprache aller Mediendateien des Interpreten bestimmt wird und die höchstwahrscheinliche Sprache für alle Mediendateien des Interpreten verwendet wird.

16. Verfahren nach Anspruch 12, wobei zum Schätzen der Sprache der ersten Mediendatei die Punktzahl jeder geschätzten Sprache für die anderen Medien bestimmt wird, wobei die Punktzahlen jeder bestimmten Sprache kombiniert werden, wobei die Sprache mit der höchsten Punktzahl als Sprache der ersten Mediendatei verwendet wird.

17. Verfahren nach einem der Ansprüche 8 bis 15, wobei die Mediendateien gemäß dem bestimmten Konfidenzwert angeordnet werden.

18. Verfahren nach einem der Ansprüche 4 bis 17, ferner umfassend den Schritt des Bestimmens, ob eine Mediendatei, die einen vorbestimmten Titel aufweist, für verschiedene Interpreten vorliegt.

## Revendications

1. Système de détection automatique du langage des données d'identification d'un fichier multimédia, comprenant :
- une unité de stockage de données (610) comprenant des fichiers multimédias, chaque fichier multimédia étant associé à des données d'identification de fichiers (612), les données d'identification de fichiers comportant au moins une saisie de données (613) permettant l'identification d'un fichier multimédia, **caractérisé par**
- une unité de supputation du langage (620) supputant le langage naturel de ladite au moins une saisie de données des données d'identification du fichier multimédia dans lequel l'unité de supputation du langage suppute le langage naturel de ladite au moins une saisie de données en fonction d'un modèle statistique et en tenant compte des données d'identification d'autres fichiers multimédias de l'artiste et/ou des saisies de données dudit fichier multimédia,
- une unité de traitement de données (630) pour ajouter le langage naturel supputé pour les données d'identification de fichier.

2. Système de détection automatique du langage selon la revendication 1, **caractérisé en ce que** les données d'identification de fichiers comprennent différents ensembles de données (614), chaque ensemble de données comprenant une saisie de données et le langage naturel ajouté.

3. Système selon les revendications 1 ou 2, **caractérisé en ce que** ladite saisie de données comprend au moins une des informations suivantes : l'artiste du fichier multimédia, le titre du fichier multimédia, le compositeur du fichier multimédia, l'année d'enregistrement du fichier multimédia, le genre du fichier multimédia.

4. Procédé pour la détection automatique du langage des données d'identification de fichiers d'un fichier multimédia, les données d'identification de fichiers comportant au moins une saisie de données permettant l'identification d'un fichier multimédia, le procédé comprenant les étapes suivantes :
- la sélection d'au moins un fichier multimédia à partir d'un groupe de fichiers multimédias,
- la récupération de ladite au moins une saisie de données des données d'identification de fichiers,
- la supputation du langage naturel de ladite au moins une saisie de données des données d'identification de fichiers multimédias en fonction d'un modèle statistique, dans lequel le langage naturel de ladite au moins une saisie de données (613) est supputé en tenant compte des données d'identification de fichiers d'autres fichiers multimédias de l'artiste ou de saisies de données dudit fichier multimédia,
- l'ajout du langage naturel supputé aux données d'identification de fichiers.

5. Procédé selon la revendication 4, dans lequel les données d'identification de fichiers (612) comprennent différents ensembles de données (614), chaque ensemble de données comprenant une saisie de données, dans lequel le langage naturel est supputé pour plusieurs saisies de données des données d'identification de fichiers.

6. Procédé selon l'une quelconque des revendications 4 ou 5, dans lequel un score est calculé pour chaque langage supputé, le score indiquant le degré de correspondance entre les données d'identification de fichiers et un langage naturel supputé.

7. Procédé selon l'une quelconque des revendications 4 à 6, dans lequel on utilise une approche basée sur la confiance pour supputer le langage naturel, approche pour laquelle une valeur de confiance est définie pour chaque langage supputé, la valeur de confiance étant une mesure du niveau de certitude permettant d'affirmer que le langage supputé de ladite saisie de données est le langage correct.

8. Procédé selon l'une quelconque des revendications 4 à 7, dans lequel le langage naturel de ladite saisie de données est supputé sur la base du score calculé ou de la valeur de confiance définie.

9. Procédé selon l'une quelconque des revendications 4 à 8, dans lequel le langage naturel est déterminé pour au moins une des informations suivantes comprises dans les données d'identification de fichiers : l'artiste du fichier multimédia, le titre du fichier multimédia, le compositeur du fichier multimédia, l'année d'enregistrement du fichier multimédia, le genre du fichier multimédia.

10. Procédé selon l'une quelconque des revendications 4 à 9, dans lequel, pour supputer le langage du nom de l'artiste d'un fichier multimédia, le langage du titre dudit fichier multimédia est déterminé et le langage déterminé est utilisé comme langage de l'artiste.

11. Procédé selon l'une quelconque des revendications 4 à 10, dans lequel les étapes suivantes sont exécutées pour déterminer le langage du nom de l'artiste :
- l'identification d'autres fichiers multimédias dudit artiste,
- la supputation des langages des titres des autres fichiers multimédias identifiés,
- la détermination du langage du nom de l'artiste en fonction des langages supputés des autres fichiers multimédias.

12. Procédé selon l'une quelconque des revendications 4 à 11, dans lequel les étapes suivantes sont exécutées pour déterminer le langage du titre d'un premier fichier multimédia :
- l'identification de l'artiste dudit premier fichier multimédia,
- l'identification d'autres fichiers multimédias dudit artiste,
- la supputation des langages des autres fichiers multimédias dudit artiste,
- la détermination du langage dudit premier fichier multimédia en correspondance avec les langages supputés des autres fichiers multimédias.

13. Procédé selon la revendication 12, dans lequel, pour supputer les langages des autres fichiers multimédias dudit artiste, tous les titres des autres fichiers multimédias sont combinés en une nouvelle chaîne de titres et le langage naturel est supputé pour ladite nouvelle chaîne de titres et le langage supputé est utilisé comme langage du premier fichier multimédia.

14. Procédé selon la revendication 12, dans lequel le langage des autres fichiers multimédias qui a été supputé le plus souvent est utilisé comme langage pour le premier fichier multimédia.

15. Procédé selon la revendication 12, dans lequel, pour supputer le langage des fichiers multimédias d'un artiste prédéterminé, le langage de tous les fichiers multimédias dudit artiste est déterminé et le langage le plus probable est utilisé pour tous les fichiers multimédias dudit artiste.

16. Procédé selon la revendication 12, dans lequel, pour supputer le langage dudit premier fichier multimédia, le score de chaque langage supputé pour les autres supports est déterminé, dans lequel les scores de chaque langage déterminé sont combinés, le langage ayant le score le plus élevé étant utilisé comme langage du premier fichier multimédia.

17. Procédé selon l'une quelconque des revendications 8 à 15, dans lequel les fichiers multimédias sont agencés en conformité avec la valeur de confiance déterminée.

18. Procédé selon l'une quelconque des revendications 4 à 17, comprenant en outre l'étape consistant à déterminer si un fichier de données ayant un titre prédéterminé existe pour différents artistes.
